# EUROPÄISCHE PATENTANMELDUNG

(11) **EP 3 933 512 A1**
(43) Veröffentlichungstag der Anmeldung: **05.01.2022**
(21) Anmeldenummer: 20193732.3
(22) Anmeldetag: 31.08.2020
(51) Int. Cl.: G05B 13/02, B23Q 17/09, G06T 7/00

(54) **VERFAHREN ZUM SUBTRAKTIVEN BEARBEITEN EINES WERKSTÜCKS UND BEARBEITUNGSANLAGE**

(30) Priorität: 30.06.2020 DE 102020208132
(71) Anmelder: Siemens Aktiengesellschaft, 80333 München (DE)
(72) Erfinder: Lutz, Benjamin Samuel, 81739 München (DE); Reisch, Raven Thomas, 81379 München (DE); Regulin, Daniel, 81825 München (DE)

(57) **Zusammenfassung**

Bei dem Verfahren zum subtraktiven Bearbeiten eines Werkstücks (WS) mittels eines Werkzeugs (FRAE, WSPL) werden mindestens zwei Prozessgrößen (BIDA, EVEN, TISE) des Bearbeitens erfasst und herangezogen und jeweils einem Neuronalen Netzwerk (IMCN, EVCN, TSCN) übergeben, welches jeweils der Prozessgröße (BIDA, EVEN, TISE) einen Verschleißgrad zuordnet, wobei anhand der mehreren Verschleißgrade auf einen Verschleiß des Werkzeugs (FRAE, WSPL) geschlossen wird.

Die Bearbeitungsanlage zum subtraktiven Bearbeiten eines Werkstücks nach einem solchen Verfahren weist ein Werkzeug (FRAE) zum Bearbeiten des Werkstücks (WS) sowie zumindest Auswerteinrichtungen (EVAU, BIAU, TSAU) zur Auswertung je einer von mindestens zwei Prozessgrößen (BIDA, EVEN, TISE) des Bearbeitens auf, welche jeweils ein Neuronales Netzwerk (EVCN, IMCN, TSCN) umfassen, welches zur Zuordnung je eines Verschleißgrades zur Prozessgröße (BIDA, EVEN, TISE) ausgebildet und eingerichtet ist, wobei die Bearbeitungsanlage (20) eine Feststellungseinheit (IND) aufweist, welche zur Feststellung eines Verschleißes des Werkzeugs (FRAE, WSPL) anhand der mehreren Verschleißgrade ausgebildet und eingerichtet ist.

## Beschreibung

Die Erfindung betrifft ein Verfahren zum subtraktiven Bearbeiten eines Werkstücks sowie eine Bearbeitungsanlage zum subtraktiven Bearbeiten eines Werkstücks.

Die Produktionskosten von Werkzeugmaschinen setzen sich unter anderem aus einem maschinenspezifischen, konstanten Maschinenstundensatz sowie Kosten infolge eines Verschleißes des verwendeten Werkzeugs zusammen. Dieser Werkzeugverschleiß hängt vom zu zerspanenden Material, von der Werkzeugbeschaffenheit und von den gewählten Schnittbedingungen ab und steigt im Zerspan-Prozess kontinuierlich, allerdings in der Regel nicht linear, an. Erreicht der Werkzeugverschleiß einen vorher festgelegten zulässigen Maximalverschleiß, so ist das Werkzeug verschlissen. Wird ein verschlissenes Werkzeug weiterverwendet, sinkt bei der subtraktiven Bearbeitung die Bauteilqualität und auch die Zerspan-Leistung sinkt drastisch. Wird ein nichtverschlissenes Werkzeug hingegen zu früh ausgewechselt, so steigen die Werkzeugkosten aufgrund der ungenutzten Werkzeugeinsatzzeit und ein erhöhter Aufwand durch zusätzliche Rüstarbeiten entsteht.

Folglich ist bei der subtraktiven Bearbeitung von Werkstücken eine Beurteilung des Verschleißes eines bei der Bearbeitung eingesetzten Werkzeugs ein kritischer Parameter.

Bislang bekannte Maßnahmen zur Beurteilung des Verschleißes eines Werkzeugs erfordern eine Entnahme des Werkzeugs oder eine mehr oder weniger zutreffende Abschätzung aufgrund getroffener Annahmen.

Grundsätzlich könnten auch weitere Daten zur Beurteilung eines Werkzeugverschleißes herangezogen werden. Bisherige Ansätze funktionieren jedoch nicht zuverlässig.

Vor diesem Hintergrund des Standes der Technik ist es daher Aufgabe der Erfindung, ein verbessertes Verfahren zum subtraktiven Bearbeiten anzugeben, bei welchem ein Verschleiß des beim Bearbeiten eingesetzten Werkzeugs besser beurteilt werden kann. Zudem ist es Aufgabe der Erfindung, eine verbesserte Bearbeitungsanlage zum subtraktiven Bearbeiten eines Werkstücks anzugeben.

Diese Aufgabe der Erfindung wird mit einem Verfahren zum subtraktiven Bearbeiten eines Werkstücks mit den in Anspruch 1 angegebenen Merkmalen sowie mit einer Bearbeitungsanlage zum subtraktiven Bearbeiten eines Werkstücks mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum subtraktiven Bearbeiten eines Werkstücks mittels eines Werkzeugs werden mindestens zwei Prozessgrößen des Bearbeitens erfasst und herangezogen und jeweils einem Neuronalen Netzwerk übergeben. Bei dem erfindungsgemäßen Verfahren ordnet je eines der Neuronalen Netzwerke der Prozessgröße einen Verschleißgrad des Werkzeugs zu, wobei anhand der mehreren Verschleißgrade auf einen Verschleiß des Werkzeugs geschlossen wird.

Bei dem erfindungsgemäßen Verfahren wird mittels einer Datenfusion der mindestens zwei Prozessgrößen auf einen Verschleiß des Werkzeugs geschlossen. Auf diese Weise kann zuverlässig auf einen Verschleiß des Werkzeugs geschlossen werden. Insbesondere lassen sich bei dem erfindungsgemäßen Verfahren falsch-negative Ereignisse leicht ausschließen, indem bereits dann auf einen Verschleiß des Werkzeugs geschlossen wird, wenn bereits anhand einer Prozessgröße auf einen entsprechenden Verschleißgrad des Werkzeugs geschlossen wird, welcher einen Verschleiß des Werkzeugs nahelegt. Alternativ und ebenfalls bevorzugt kann bei dem erfindungsgemäßen Verfahren derart auf einen Verschleiß des Werkzeugs geschlossen werden, dass eine Bearbeitungszeit eines oder mehrerer nacheinander gefertigter Werkstücke minimiert wird oder ein minimaler Werkzeugverschleiß angestrebt wird. Bevorzugt wird bei dem erfindungsgemäßen Verfahren dann, wenn auf einen Verschleiß des Werkzeugs geschlossen wird, das Werkzeug gewechselt.

Im Gegensatz zu bekannten Lösungen werden bei dem erfindungsgemäßen Verfahren multimodale Daten, d.h. eine Datenfusion der mindestens zwei Prozessgrößen, verwendet, um die Genauigkeit eines Schließens auf einen Verschleiß des Werkzeugs zu erhöhen.

Mittels des erfindungsgemäßen Verfahrens können vorteilhaft Kosten bei dem subtraktiven Bearbeiten des Werkstücks eingespart werden, da weder zusätzliche Kosten durch einen verfrühten Werkzeugverbrauch anfallen, noch Folgekosten aufgrund von Beschädigungen des Werkstücks infolge eines verschlissenen Werkzeugs anfallen.

Vorteilhaft kann mittels eines erfindungsgemäß möglichen, präzisen Schlusses auf einen Verschleiß des Werkzeugs eine erhöhte Bearbeitungsqualität erzielt werden. Insbesondere kann ein Ausschuss von Werkstücken aufgrund verschlissenen Werkzeugs reduziert werden.

Eine manuelle Überprüfung des Werkzeugs ist aufgrund des leicht automatisierbaren erfindungsgemäßen Verfahrens nicht erforderlich, sodass Zeit und Personalkosten gespart werden können.

Bevorzugt werden bei dem erfindungsgemäßen Verfahren eine oder mehrere oder sämtliche der Prozessgrößen zeitaufgelöst erfasst, vorzugsweise wiederholt, insbesondere periodisch, und/oder kontinuierlich.

In dieser Weiterbildung der Erfindung wird vorteilhaft das zeitliche Prozessverhalten des Bearbeitens des Werkstücks berücksichtigt. Auf diese Weise kann insbesondere die aktuelle Prozesssituation beim Bearbeiten des Werkstücks herangezogen werden. Eine Drift von Prozessparametern etwa beeinträchtigt daher in dieser Weiterbildung die Zuverlässigkeit des erfindungsgemäßen Verfahrens nicht.

In einer vorteilhaften Weiterbildung des erfindungsgemäßen Verfahrens umfassen die mindestens zwei Prozessgrößen eine Gestalt des Werkzeugs und/oder einen Betriebsstrom und/oder eine Betriebsspannung zum Betrieb des Werkzeugs und/oder Wartungs- und Instandhaltungsinformationen und/oder Unterbrechungsinformationen.

Vorzugsweise wird in dieser Weiterbildung des erfindungsgemäßen Verfahrens die Gestalt des Werkzeugs mittels Bildgebung, insbesondere mittels einer Kamera und/oder mittels eines Scanners, vorzugsweise eines Laserscanners, erfasst. Zweckmäßig kann etwa anhand einer Rundheit eines Schneidwerkzeugs auf einen Verschleiß des Werkzeugs zuverlässig geschlossen werden. Auf diese Weise können visuelle Effekte bei einem Schließen auf einen Verschleiß berücksichtigt werden.

Auch ein Betriebsstrom und/oder eine Betriebsspannung beim Betrieb des Werkzeugs während des Bearbeitens liefert wichtige Informationen, welche relevant für ein Verschleiß des Werkzeugs sein können. So liefert etwa ein Betriebsstrom beim Betrieb eines Fräsers eine Information über ein anzuwendendes Drehmoment beim Bearbeiten des Werkstücks mittels des Fräsers. Auf diese Weise kann aus dem Betriebsstrom des Fräsers auf einen Verschleiß des Fräsers, auch als Fräswerkzeug bezeichnet, geschlossen werden, wenn sich das Drehmoment des Fräsers und folglich der Betriebsstrom des Fräsers ungewöhnlich rasch oder drastisch ändern.

Wartungs- und Instandhaltungsinformationen und/oder Unterbrechungsinformationen liefern, insbesondere im Kontext der übrigen Prozessgrößen, zusätzliche Informationen, welche für einen Schließen auf einen Verschleiß des Werkzeugs wie insbesondere eines Fräsers von Bedeutung sind. So kann insbesondere ein kürzlich erfolgter Wechsel oder eine Inspektion des Werkzeugs und/oder ein ungewöhnlich verlängertes Wartungsintervall bei einer Wartung einer zur Durchführung des erfindungsgemäßen Verfahrens herangezogenen Bearbeitungsanlage wertvolle Informationen zur Interpretation der Prozessgrößen geben.

Bei dem Verfahren gemäß der Erfindung bilden oder umfassen in einer vorteilhaften Weiterbildung zumindest eines oder mehrere der Neuronalen Netzwerke ein Tiefes Neuronales Netzwerk und/oder ein Convolutional Neural Network und/oder ein Multilayer Perceptron und/oder ein Long Short Term Memory und/oder einen Autoencoder.

Mittels eines Convolutional Neural Network können Bilder von Werkzeugen abhängig vom Grad des Verschleißes klassifiziert werden. Das Convolutional Neural Network kann dabei unterschiedliche Architekturen ausweisen. Zweckmäßig weist das Convolutional Neural Network zwischen 8 und 12 Layern, insbesondere 10 Layer, davon 6 Convolutional Layer sowie 4 Dense Layer und/oder vollständig verbundene Layer sowie optional und bevorzugt eine Rectifier-Aktivierungsfunktion auf, welche vorteilhaft für eine Klassifizierung insbesondere von Bilddaten gute Ergebnisse aufweist.

Vorteilhaft lassen sich Neuronale Netzwerke zur effizienten Zeitreihenklassifizierung insbesondere von Stromdaten einsetzen. Bevorzugt weist das Neuronale Netzwerk ein Multilayer Perceptron oder ein Long Short Term Memory auf. Für das Multilayer Perceptron werden zunächst Eigenschaften der Zeitreihe festgelegt, welche dem Neuronalen Netzwerk übergeben werden, d.h. die Zeitreihe wird zunächst vorverarbeitet, bevor sie an das Neurale Netzwerk übergeben wird. Im Falle von Stromdaten oder Drehmomenten des Werkzeugs eignet sich dafür ein Mittelwert und/oder eine Standardabweichung und/oder ein integrierter Stromwert bis zur Aufnahme eines zweckmäßig ebenfalls bei dem erfindungsgemäßen Verfahren herangezogenen Bilds des Werkzeugs. Vorteilhaft erfordert ein Long Short Term Memory keine Vorverarbeitung einer Zeitreihe.

Bei dem erfindungsgemäßen Verfahren wird zweckmäßig mittels einer Logik, insbesondere einer binären Logik, auf einen Verschleiß des Werkzeugs geschlossen.

Mittels der erfindungsgemäß zumindest zwei vorliegenden unabhängig gewonnenen Verschließgrade können diese in Kombination zu einem Schluss auf den Verschleiß des Werkzeugs herangezogen werden. Vorzugsweise werden die Verschleißgrade miteinander kombiniert, indem ein resultierender Verschleißgrad im Sinne eines quantitativen Schlusses mittels der Logik bestimmt wird. Alternativ und ebenfalls bevorzugt kann ein Verschleiß des Werkzeugs als qualitative Aussage, d.h. eine Aussage, ob ein Verschleiß des Werkzeugs vorliegt oder nicht, formuliert werden.

Die vorzugsweise herangezogene binären Logik kann bei dem erfindungsgemäßen Verfahren ein Risiko falsch-negativer Schlüsse auf einen Verschleiß des Werkzeugs reduzieren.

Bei dem Verfahren gemäß der Erfindung ist oder umfasst das Werkzeug vorzugweise einen Fräser und/oder einen Bohrer und/oder eine Wendeschneidplatte.

Geeigneterweise werden bei dem erfindungsgemäßen Verfahren die Prozessgrößen mittels eines oder mehrerer Sensoren und/oder einer Logdatei erfasst.

Zweckmäßig werden in dieser Weiterbildung des erfindungsgemäßen Verfahrens Sensoren in Form einer Kamera, insbesondere zur Erfassung einer Gestalt des Werkzeugs, und/oder eines Strommessers, insbesondere zur Erfassung eines Betriebsstroms zum Betrieb des Werkzeugs, und/oder eines Spannungsmessers, insbesondere zur Erfassung einer Betriebsspannung zum Betrieb des Werkzeugs, herangezogen.

Bei dem Verfahren gemäß der Erfindung wird vorzugsweise dann, wenn auf einen Verschleiß des Werkzeugs geschlossen wird, das Werkzeug gewechselt wird und/oder das Bearbeiten unterbrochen.

Die erfindungsgemäße Bearbeitungsanlage ist zum subtraktiven Bearbeiten eines Werkstücks nach einem Verfahren wie vorhergehend beschrieben ausgebildet. Die erfindungsgemäße Bearbeitungsanlage weist ein Werkzeug zum Bearbeiten des Werkstücks sowie zumindest Auswerteinrichtungen zur Auswertung je einer von mindestens zwei Prozessgrößen des Bearbeitens auf, die jeweils ein Neuronales Netzwerk umfassen, das zur Zuordnung je eines Verschleißgrades zur Prozessgröße ausgebildet und eingerichtet ist. Die erfindungsgemäße Bearbeitungsanlage weist zudem eine Feststellungseinheit auf, welche zur Feststellung eines Verschleißes des Werkzeugs anhand der mehreren Verschleißgrade ausgebildet und eingerichtet ist.

Bevorzugt weist die erfindungsgemäße Bearbeitungsanlage Erfassungsmittel auf, welche zur Erfassung der mindestens zwei Prozessgrößen angeordnet und ausgebildet sind.

Nachfolgend wird die Erfindung anhand eines in der Zeichnung dargestellten Ausführungsbeispiels näher erläutert. Es zeigen:
- Fig. 1: ein Flussdiagramm eines Ausführungsbeispiels des erfindungsgemäßen Verfahrens in einer Prinzipskizze sowie
- Fig. 2: eine erfindungsgemäße Anlage zur Ausführung des erfindungsgemäßen Verfahrens gem. Fig. 1.

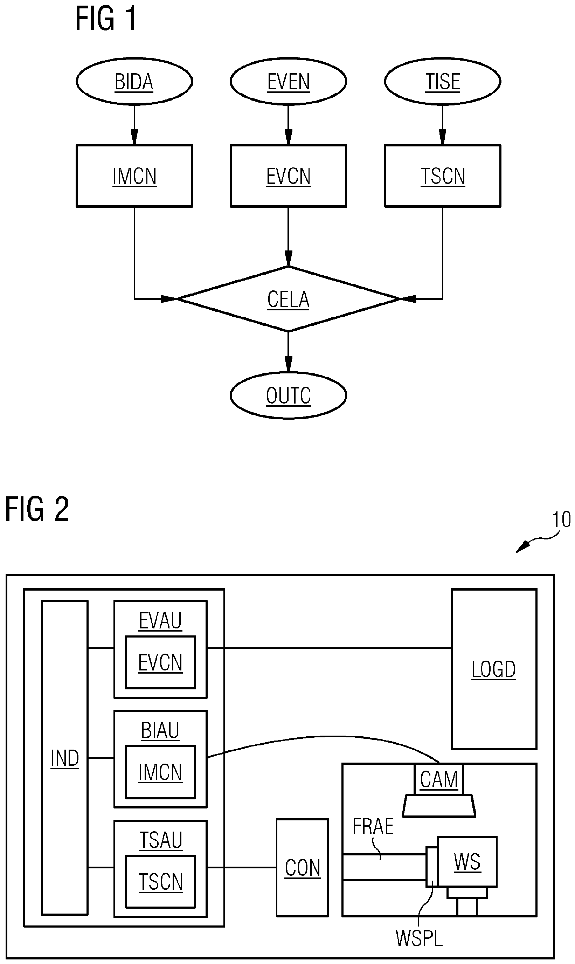

Das in Fig. 1 dargestellte erfindungsgemäße Verfahren ist ein Verfahren zum subtraktiven Bearbeiten eines Werkstücks. Das Verfahren ist im dargestellten Ausführungsbeispiel ein Fräsverfahren. In alternativen, nicht eigens dargestellten Ausführungsbeispielen handelt es sich bei dem Verfahren um ein Drehverfahren.

Bei dem Fräsverfahren werden zum Bearbeiten eines Werkstücks WS Fräser FRAE eingesetzt, in welchen Wendeschneidplatten WSPL aus einer Hartkeramik eingeschraubt sind. Diese Fräser FRAE mit den Wendeschneidpatten WSPL bilden Werkzeuge einer erfindungsgemäßen Fertigungsanlage 10. In weiteren, nicht eigens dargestellten Ausführungsbeispielen können alternativ oder zusätzlich andere Werkzeuge eingesetzt werden.

Während des subtraktiven Bearbeitens des Werkstücks WS verschleißen die Wendeschneidplatten WSPL. Um zu erkennen, wann diese Wendeschneidplatten WSPL idealerweise gewechselt werden sollten, werden bei dem erfindungsgemäßen Verfahren wie in Fig. 1 dargestellt mehrere Eingangsdaten herangezogen, um den Verschleiß der Wendeschneidplatten WSPL zu beobachten und zeitlich zu verfolgen. Dazu weist die Fertigungsanlage 10 eine Kamera CAM auf, welche ausgebildet ist, Bilder der Wendeschneidplatte WSPL aufzunehmen, wenn die Wendeschneidplatte WSPL stillsteht, beispielsweise zwischen Bearbeitungsschritten oder bei einem Wechsel des Werkstücks WS. Bei der Fertigungsanlage 10 ist eine Entnahme der Wendeschneidplatte WSPL zur Aufnahme von Bildern nicht erforderlich.

Die Bilder werden zu regelmäßigen Zeitpunkten aufgenommen und die resultierenden Bilddaten BIDA einer Bildauswerteinrichtung BIAU zugeführt.

Die Bildauswerteinrichtung BIAU umfasst ein Tiefes Neuronales Netzwerk IMCN, welches in der englischsprachigen Literatur als Deep Neural Network bekannt ist. Im dargestellten Ausführungsbeispiel ist das Tiefe Neuronale Netzwerk ein Convolutional Neural Network. Das Tiefe Neuronale Netzwerk nimmt die Bilddaten BIDA entgegen und klassifiziert die Bilddaten BIDA anhand von in einem Trainingslauf des Tiefen Neuronalen Netzwerks IMCN gewonnene Verschleißklassen. Die Verschleißklassen geben einen Grad des Verschleißes der Wendeschneidplatte WSPL wieder. Die Verschleißklassen enthalten einen isolierten, ausschließlich aus den Bilddaten BIDA gewonnenen, Hinweis darauf, ob der Grad des Verschleißes der Wendeschneidplatte WSPL einen Wechsel der Wendeschneidplatte WSPL nahelegt oder nicht.

Zum anderen werden bei der Fertigungsanlage 10 nicht allein Bilddaten BIDA des Fräsers FRAE und der an diesem angebundenen Wendeschneidplatte WSPL erfasst. Zusätzlich werden auch Zeitreihendaten eines Betriebsstroms des Fräsers FRAE erfasst, welcher mit einem zur Bearbeitung des Werkstücks WS erforderlichen Drehmoment und folglich mit einem Verschleiß der Wendeschneidplatte WSPL korreliert. Dazu sind nicht explizit in der Zeichnung dargestellte Stromerfassungsmittel in einer Steuereinrichtung CON der Fertigungsanlage 10 angeordnet, welche ausgebildet sind, den Betriebsstrom des Fräsers FRAE zeitaufgelöst zu erfassen. Die zeitlich erfassten Stromdaten TISE werden einer Stromauswerteinrichtung TSAU übermittelt.

Die Stromauswerteinrichtung TSAU umfasst ein Neuronales Netzwerk TSCN zur Klassifizierung der Stromdaten TISE. Die zeitaufgelöst erfassten Stromdaten TISE bilden eine Zeitreihe. Zur geeigneten Analyse der Zeitreihe ist das Neuronale Netzwerk TSCN als Multilayer Perceptron ausgebildet. Die Zeitreihe wird mittels der Stromauswerteinrichtung TSAU derart für das Neuronale Netzwerk TSCN aufbereitet, dass zunächst bestimmte Eigenschaften der Zeitreihe von Stromdaten TISE bestimmt werden, im dargestellten Ausführungsbeispiel ein Mittelwert und eine Standardabweichung der erfassten Stromdaten TISE. Ferner wird als weitere Eigenschaft der Zeitreihe ein integrierter Stromwert zwischen jeweils zwei von der Kamera CAM erfassten Bildern bestimmt. Diese Eigenschaften der Zeitreihe werden nun dem Neuronalen Netzwerk TSCN übergeben. In weiteren, nicht eigens dargestellten Ausführungsbeispielen kann anstelle des Multilayer Perceptrons ein Long Short Term Memory verwendet werden. In solchen Ausführungsbeispielen ist keine vorherige Bestimmung von Eigenschaften der Zeitreihe erforderlich. Das Neuronale Netzwerk TSCN klassifiziert die Stromdaten TISE in Stromklassen, welche einen Verschleißgrad der Wendeschneidplatte WSPL indizieren. Die Stromklassen enthalten einen isolierten, ausschließlich aus den Stromdaten TISE gewonnenen, Hinweis darauf, ob der Grad des Verschleißes der Wendeschneidplatte WSPL einen Wechsel der Wendeschneidplatte WSPL nahelegt oder nicht.

Zusätzlich wird im gezeigten Ausführungsbeispiel eine weitere Einflussgröße zur Bestimmung eines Verschleißes der Wendeschneidplatte WSPL herangezogen. Diese Einflussgröße bildet eine Zeitreihe von Eintragungen einer Logdatei LOGD der Fertigungsanlage 10. Die Eintragungen weisen Informationen über Wechsel von Wendeschneidplatten WSPL und Monitoringergebnisse von Aufspannsituationen des Fräsers FRAE auf. Ferner enthalten die Eintragungen Instandsetzungsaktivitäten an der Fertigungsanlage 10. Diese Zeitreihe wird einer Logdatenauswerteinrichtung EVAU übermittelt, welche mittels eine Neuronalen Netzwerks EVCN eine Klassifizierung von Betriebszuständen der Fertigungsanlage 10 ermittelt. Die Klassifizierung von Betriebzuständen der Fertigungsanlage 10 ordnet den Betriebszustand der Fertigungsanlage 10 einer Klasse zu, welche einem bestimmten angenommenen Verschleißgrad der Wendeschneidplatte WSPL entspricht.

Mittels des zuvor beschriebenen Verfahrens werden also drei unabhängige Werte zur Ermittlung eines Verschleißgrades der Wendeschneidplatte WSPL ermittelt. Diese Werte werden einer Verschleißgradbestimmungseinrichtung OUTC übermittelt, welche anhand der unabhängigen Werte eine abschließende Beurteilung des Verschleißgrades der Wendeschneidplatte WSPL vornimmt. Dazu verarbeitet die Verschleißgradbestimmungseinrichtung OUTC die von der Logdatenauswerteinrichtung EVAU und der Bildauswerteinrichtung BIAU sowie der Stromauswerteinrichtung TSAU gelieferten Werte mittels einer binären Logik. Die binäre Logik ist im gezeigten Ausführungsbeispiel daraufhin optimiert, falsch negative Werte zu reduzieren, d.h. die Verschleißgradbestimmungseinrichtung OUTC bestimmt dann einen Verschleißgrad der Wendeschneidplatte WSPL, welcher einen Wechsel der Wendeschneidplatte WSPL erfordert, wenn bereits eine einzige der Einrichtungen der Gruppe umfassend die Logdatenauswerteinrichtung EVAU und die Bildauswerteinrichtung BIAU und die Stromauswerteinrichtung TSAU einen solchen Verschleißgrad feststellt.

In weiteren, nicht eigens dargestellten Ausführungsbeispielen ist die binäre Logik auf abweichende Ziele des Verfahrens optimiert, nämlich auf eine minimale Prozesszeit oder auf einen minimalen Werkzeugverschleiß.

Zur Durchführung des Verfahrens sind das Neuronale Netzwerk TSCN und das Neuronale Netzwerks EVCN sowie das Tiefe Neuronale Netzwerk IMCN vor der Durchführung des Verfahrens mit einer Vielzahl an Bearbeitungsvorgängen mit Wendeschneidplatten WSPL umfassend trainiert worden.

## Patentansprüche

1. Verfahren zum subtraktiven Bearbeiten eines Werkstücks (WS) mittels eines Werkzeugs (FRAE, WSPL), bei welchem mindestens zwei Prozessgrößen (BIDA, EVEN, TISE) des Bearbeitens erfasst und herangezogen und jeweils einem Neuronalen Netzwerk (IMCN, EVCN, TSCN) übergeben werden, welches jeweils der Prozessgröße (BIDA, EVEN, TISE) einen Verschleißgrad zuordnet, wobei anhand der mehreren Verschleißgrade auf einen Verschleiß des Werkzeugs (FRAE, WSPL) geschlossen wird.

2. Verfahren nach dem vorhergehenden Anspruch, bei welchem eine oder mehrere oder sämtliche der Prozessgrößen (BIDA, EVEN, TISE) zeitaufgelöst erfasst werden, vorzugsweise wiederholt, insbesondere periodisch, und/oder kontinuierlich.

3. Verfahren nach einem der vorhergehenden Ansprüche, bei welchem die mindestens zwei Prozessgrößen (BIDA, EVEN, TISE) eine Gestalt (BIDA) des Werkzeugs (FRAE, WSPL) und/oder einen Betriebsstrom und/oder eine Betriebsspannung (TISE) zum Betrieb des Werkzeugs (FRAE, WSPL) und/oder Wartungs- und Instandhaltungsinformationen und/oder Unterbrechungsinformationen (EVEN) des Bearbeitens umfassen.

4. Verfahren nach einem der vorhergehenden Ansprühe, bei welchem zumindest eines oder mehrere der Neuronalen Netzwerke (EVCN, IMCN, TSCN) ein Tiefes Neuronales Netzwerk und/oder ein Convolutional Neural Network und/oder ein Multilayer Perceptron und/oder ein Long Short Term Memory und/oder einen Autoencoder bilden oder umfassen.

5. Verfahren nach einem der vorhergehenden Ansprüche, bei welchem mittels einer Logik, insbesondere einer binären Logik, auf einen Verschleiß des Werkzeugs (FRAE, WSPL) geschlossen wird.

6. Verfahren nach einem der vorhergehenden Ansprüche, bei welchem das Werkzeug (FRAE, WSPL) einen Fräser (FRAE) und/oder einen Bohrer und/oder eine Wendeschneidplatte (WSPL) ist oder umfasst.

7. Verfahren nach einem der vorhergehenden Ansprüche, bei welchem die Prozessgrößen (BIDA, EVEN, TISE) mittels eines oder mehrerer Sensoren (CAM, CON) und/oder einer Logdatei (LOGD) erfasst werden.

8. Verfahren nach einem der vorhergehenden Ansprüche, bei welchem dann, wenn auf einen Verschleiß des Werkzeugs geschlossen wird, das Werkzeug gewechselt wird und/oder das Bearbeiten unterbrochen wird.

9. Bearbeitungsanlage zum subtraktiven Bearbeiten eines Werkstücks nach einem Verfahren nach einem der vorhergehenden Ansprüche, welche ein Werkzeug (FRAE) zum Bearbeiten des Werkstücks (WS) aufweist sowie zumindest Auswerteinrichtungen (EVAU, BIAU, TSAU) zur Auswertung je einer von mindestens zwei Prozessgrößen (BIDA, EVEN, TISE) des Bearbeitens aufweist, welche jeweils ein Neuronales Netzwerk (EVCN, IMCN, TSCN) umfassen, welches zur Zuordnung je eines Verschleißgrades zur Prozessgröße (BIDA, EVEN, TISE) ausgebildet und eingerichtet ist, wobei die Bearbeitungsanlage (20) eine Feststellungseinheit (IND) aufweist, welche zur Feststellung eines Verschleißes des Werkzeugs (FRAE, WSPL) anhand der mehreren Verschleißgrade ausgebildet und eingerichtet ist.

10. Bearbeitungsanlage nach Anspruch 9, welche Erfassungsmittel (CAM, CON, LOGD) zur Erfassung der mindestens zwei Prozessgrößen (BIDA, EVEN, TISE) aufweist.
